# FASCICULE DE BREVET EUROPEEN

(11) **EP 3 674 586 B1**
(45) Date de publication et mention de la délivrance du brevet: **23.06.2021**
(21) Numéro de dépôt: 19216932.4
(22) Date de dépôt: 17.12.2019
(51) Int. Cl.: F16K 5/06, F16K 5/12

(54) **VANNE**
VENTIL
VALVE

(30) Priorité: 26.12.2018 BE 201805948
(43) Date de publication de la demande: 01.07.2020
(73) Titulaire: Safran Aero Boosters S.A., 4041 Herstal (BE)
(72) Inventeur: FEZAS, Aurore, 4041 Herstal (BE); PIERSON, Michel, 4041 Herstal (BE); MERCADANTE, Anthony, 4041 Herstal (BE)
(74) Mandataire: Gevers Patents

(56) Documents cités:
- EP-A2- 2 299 152
- WO-A1-2017/039516
- US-A1- 2006 162 792
- US-A1- 2014 209 828

## Description

### Domaine technique

La présente invention concerne une vanne.

### Art antérieur

Il existe des vannes comprenant un obturateur rotatif. Un problème de ces vannes est leur manque de précision. En effet, il est difficile de régler précisément le débit de fluide passant à travers ces vannes.

### Résumé de l'invention

Un objet de la présente invention est de fournir une vanne permettant de réguler plus finement le débit de fluide.

A cet effet, l'invention propose une vanne comprenant un canal et un dispositif d'obstruction, le dispositif d'obstruction comprenant :
- un obstacle obstruant partiellement le canal de façon, l'obstacle comprenant un premier et un deuxième éléments d'obstacle couplés mécaniquement à une paroi intérieure du canal, et
- un obturateur rotatif agencé pour tourner autour d'un axe de rotation ; la vanne étant agencée pour avoir :
   - une position fermée dans laquelle le dispositif d'obstruction obstrue au maximum le canal, et
   - une position ouverte dans laquelle le dispositif d'obstruction obstrue au minimum le canal ;
   le canal comprenant une première partie qui est la partie du canal qui est désobstruée en premier par l'obturateur rotatif lors d'un mouvement de rotation de l'obturateur rotatif pour passer entre la position fermée et la position ouverte de la vanne,
   dans laquelle le premier et le deuxième éléments d'obstacle ont une saillie tournée en direction de la première partie du canal.

Lorsque la vanne commence à s'ouvrir, c'est-à-dire lorsque l'obturateur rotatif commence à tourner, l'ouverture par laquelle peut passer le fluide est dans la première partie du canal. Cette ouverture a initialement une forme de croissant. Ce croissant s'agrandit au fur et à mesure que l'obturateur rotatif poursuit sa course rotative, de préférence sans rencontrer d'obstacle. C'est la première partie de la course rotative.

Lorsque l'obturateur rotatif continue sa course rotative, l'ouverture rencontre les premier et deuxième éléments d'obstacle. La deuxième partie de la course rotative commence alors. Puisque les saillies des premier et deuxième éléments d'obstacle sont dirigées vers la première partie du canal, l'ouverture en forme de croissant peut s'étendre dans des creux entre la paroi du canal et les premier et deuxième éléments d'obstacle. Ainsi, les saillies permettent que la surface de l'ouverture qui correspond à la rencontre avec les premier et deuxième éléments d'obstacle soit particulièrement grande. Un premier effet des saillies est donc de permettre d'atteindre un grand débit pour un angle faible au début de la course rotative de l'obturateur rotatif.

Dans la deuxième partie de la course rotative, l'ouverture continue à s'étendre et son aire peut dépendre de la forme des premier et deuxième éléments d'obstacle. Comme la rencontre de l'ouverture avec les saillies se produit à un angle de course faible tout en ayant un grand débit, l'ensemble de la deuxième partie de la course rotative peut correspondre à une amplitude angulaire importante. Ainsi, une variation de débit peut correspondre à une variation angulaire particulièrement grande de la course angulaire de l'obturateur rotatif. Par conséquent, il est possible en variant faiblement l'angle de rotation de l'obturateur rotatif, d'obtenir une variation de débit particulièrement petite. En d'autres termes, l'invention permet d'obtenir une grande résolution de débit dans la partie de la course angulaire de l'obturateur rotatif où le débit est grand.

Un avantage de l'invention est que l'obturateur rotatif, qui est un élément devant répondre à des spécifications particulièrement contraignantes puisqu'il tourne, peut être d'une forme relativement simple. En effet, la complexité de la forme de l'ouverture peut être reportée sur l'obstacle, qui ne tourne pas.

La vanne est de préférence une vanne à boisseau creux. La vanne peut par exemple être une vanne cryogénique pour un moteur de fusée. Le fluide peut par exemple être de l'oxygène, de l'hydrogène, ou du méthane liquides ou gazeux..

Le canal est de section circulaire. La première partie du canal peut être vue par exemple comme la partie du canal correspondant à une rotation de 0° à 10° de l'obturateur rotatif à partir de la position fermée. Elle a de préférence une section en forme de croissant.

L'obstacle est un élément d'obstruction du canal. Il est de préférence fixe. Il est couplé mécaniquement, de préférence fixé, à la surface intérieure du canal. Les premier, deuxième et optionnellement troisième éléments d'obstacle sont préférentiellement dans un même plan qui forme une section du canal. L'obstacle définit un goulet pour le fluide, qui est la partie du canal complémentaire de l'obstacle. Les saillies, qui peuvent être appelées « sommets » ou « crêtes » ou « pointes » peuvent être pointues ou arrondies.

L'obturateur rotatif peut être appelé cuillère ou boisseau creux. L'axe de rotation est de préférence perpendiculaire à la direction de passage du fluide dans le canal. De préférence, l'obturateur rotatif obstrue sur un secteur angulaire limité, d'environ 90° d'angle au centre. Le fluide passe à côté de l'obturateur, entre lui et la section du canal.

La course ou course rotative est le déplacement angulaire de l'obturateur mobile entre la position fermée, qui correspond de préférence à un angle de 0°, et la position ouverte, qui correspond de préférence à un angle de 90°.

L'ouverture du canal est la partie de la section du canal au niveau du dispositif d'obstruction qui n'est pas obstruée par le dispositif d'obstruction. En position fermée, l'ouverture est minimale. En position ouverte, l'ouverture est maximale. En position ouverte, l'ouverture correspond de préférence au goulet défini par l'obstacle. En position fermée, l'ouverture est, de préférence, inexistante, car l'obturateur rotatif obstrue totalement le goulet défini par l'obstacle. Il y a une continuité de positions intermédiaires entre la position fermée et la position ouverte qui correspondent à l'agrandissement progressif de l'ouverture au fur et à mesure de la course.

Dans un mode de réalisation de l'invention, l'obstacle est symétrique par rapport à un plan médian perpendiculaire à l'axe de rotation et qui sépare le canal en deux parties symétriques.

Cela permet d'éviter les pertes de charge dans le fluide.

Dans un mode de réalisation de l'invention, le premier et le deuxième éléments d'obstacle comprennent chacun une première surface orientée vers la surface intérieure du canal.

Dans un mode de réalisation de l'invention, l'obstacle est tel qu'il existe un rayon de la section du canal qui part de la surface intérieure du canal, puis passe successivement par une partie de canal non-obstruée par l'obstacle (c'est-à-dire par un creux entre la surface intérieure du canal et le premier élément d'obstacle), par le premier élément d'obstacle puis par une partie de canal non-obstruée par l'obstacle et arrive au centre de la section du canal. De même pour le deuxième élément d'obstacle.

Dans un mode de réalisation de l'invention, les premières surfaces des premier et deuxième éléments d'obstacle sont courbes et convexes.

Cela permet d'avoir une ouverture en forme de croissant ayant une aire particulièrement grande durant la course de l'obturateur rotatif.

Dans un mode de réalisation de l'invention, la vanne est agencée pour que les premières surfaces des premier et deuxième éléments d'obstacle se superposent à la limite de l'évidement de l'obturateur rotatif lors de la transition entre la première partie de la course rotative et la deuxième partie de la course rotative.

Dans un mode de réalisation de l'invention, le premier et le deuxième éléments d'obstacle comprennent chacun une deuxième surface orientée vers un axe de symétrie du canal.

Dans un mode de réalisation de l'invention, les deuxième surfaces des premier et deuxième éléments d'obstacle sont courbes et convexes.

Dans un mode de réalisation de l'invention, l'obstacle est situé en amont de l'axe de rotation par rapport au mouvement de fluide.

Cela permet que l'obstacle fasse écran devant l'obturateur rotatif. Ainsi, les tensions subies par l'obturateur rotatif sont réduites et l'obturateur rotatif peut être particulièrement peu épais. Cette faible épaisseur permet que le couple exercé par le fluide sur la vanne soit particulièrement faible.

Dans un mode de réalisation de l'invention, la vanne est agencée pour qu'en position fermée, l'obturateur rotatif soit partiellement engagés entre le premier et le deuxième éléments d'obstacle.

Cela permet de diminuer les fuites entre l'obturateur rotatif et les éléments d'obstacle.

Dans un mode de réalisation de l'invention, l'obturateur rotatif comprend un évidement symétrique par rapport à un plan médian perpendiculaire à l'axe de rotation et qui sépare le canal en deux parties symétriques.

Dans un mode de réalisation de l'invention, l'axe de rotation est décalé vers la première partie du canal par rapport à un axe de symétrie du canal.

Ce décalage est de préférence de 0,5 à 5%, par exemple de 2% du diamètre du canal. Cela permet de décaler l'obturateur rotatif vers l'aval en position fermée. Le frottement entre l'obturateur rotatif et le joint est alors moindre, ce qui diminue l'usure du joint, et améliore l'étanchéité et la précision de la régulation à long terme.

L'obstacle comprend un troisième élément d'obstacle couplé mécaniquement à une paroi intérieure du canal et situé à l'opposé du canal par rapport à la première partie du canal.

Ce troisième élément d'obstacle correspond à la partie de la course où l'ouverture est très grande. A cause de l'épaisseur de l'obturateur rotatif, celui-ci obstrue partiellement le canal, même en position ouverte. Le troisième élément d'obstacle fait écran devant l'obturateur rotatif en position ouverte, ce qui permet de diminuer les tensions dans l'obturateur rotatif et de réduire les pertes de charge du fluide. Ainsi, la valeur de débit atteinte en fin de troisième partie de course est particulièrement haute. De préférence, en position ouverte, l'obturateur rotatif est complétement caché derrière l'obstacle.

Le troisième élément d'obstacle comprend une surface parallèle à l'axe de rotation.

Dans un mode de réalisation de l'invention, le troisième élément d'obstacle est disjoint des premier et deuxième éléments d'obstacle.

Dans un mode de réalisation de l'invention, la vanne comprend au plus trois éléments d'obstacle.

Dans un mode de réalisation de l'invention, l'aire de l'obstacle représente 10% à 40% de l'aire d'une section du canal, de préférence 20% à 30% de l'aire d'une section du canal.

L'invention propose en outre une utilisation d'une vanne selon l'un quelconque des modes de réalisation de l'invention, l'utilisation comprenant une rotation de l'obturateur rotatif autour de l'axe de rotation.

Les avantages mentionnés pour le dispositif s'appliquent mutatis mutandis à la méthode.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre un exemple d'un obturateur rotatif qui peut être utilisé dans un mode de réalisation d'une vanne selon l'invention ;
- la figure 2 est une vue en élévation d'une partie d'une vanne selon un mode de réalisation de l'invention ;
- la figure 3a est une coupe schématique dans un plan médian, et illustrant une vanne selon un mode de réalisation de l'invention dans une position fermée ;
- la figure 3b est en coupe schématique dans un plan qui comprend un axe de symétrie du canal et qui perpendiculaire au plan médian, et illustrant une vanne selon un mode de réalisation de l'invention dans une position fermée ;
- la figure 4a est une coupe schématique dans un plan médian, et illustrant une vanne selon un mode de réalisation de l'invention dans une position intermédiaire ;
- la figure 4b est une coupe schématique dans un plan qui comprend un axe de symétrie du canal et qui perpendiculaire au plan médian, et illustrant une vanne selon un mode de réalisation de l'invention dans une position intermédiaire ;
- la figure 5a est une coupe schématique dans un plan médian, et illustrant une vanne selon un mode de réalisation de l'invention dans une position ouverte ;
- la figure 5b est une coupe schématique dans un plan qui comprend un axe de symétrie du canal et qui perpendiculaire au plan médian, et illustrant une vanne selon un mode de réalisation de l'invention dans une position ouverte ;
- la figure 6 est une vue en élévation illustrant l'évolution de la position d'un l'obturateur rotatif selon un mode de réalisation de l'invention au fur et à mesure de sa course rotative ; et
- la figure 7 est un exemple de courbe de débit pouvant être obtenue grâce à la vanne selon l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

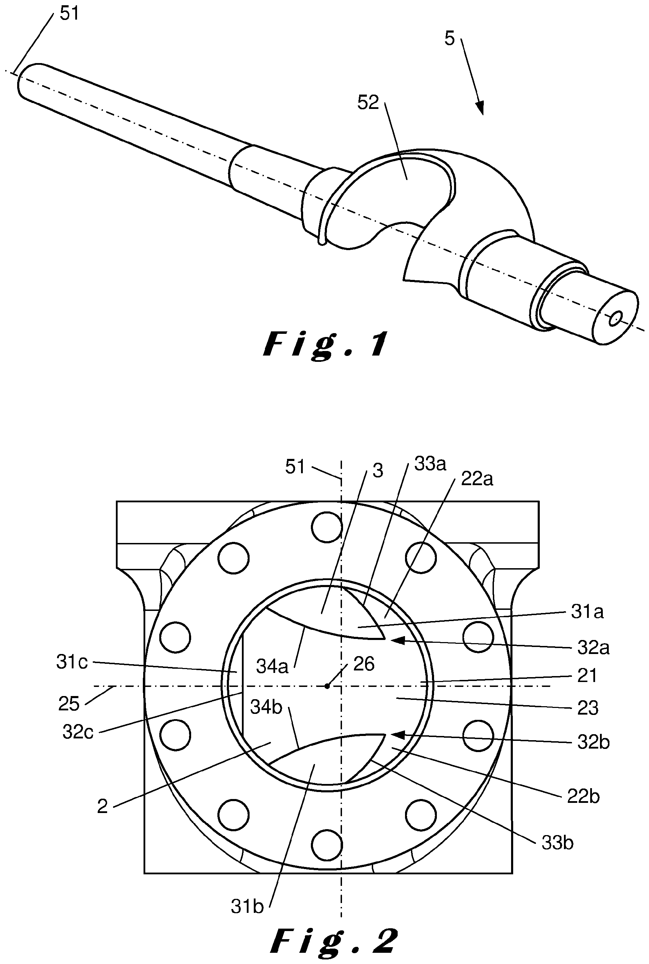

La figure 1 illustre un exemple d'un obturateur rotatif 5 qui peut être utilisé dans un mode de réalisation d'une vanne selon l'invention. L'obturateur rotatif 5 est agencé pour tourner autour d'un axe de rotation 51. L'obturateur rotatif 5 est creusé d'un évidement 52.

La figure 2 est une vue en élévation illustrant notamment un canal 2 agencé pour faire passer un fluide et un obstacle 3 agencé pour réduire l'aire de passage du fluide dans le canal 2, et qui peuvent être utilisés dans un mode de réalisation d'une vanne selon l'invention.

La figure 2 illustre aussi la position de l'axe de rotation 51 de l'obturateur rotatif 5, la position d'un plan médian 25 perpendiculaire à l'axe de rotation 51 et séparant le canal 2 en deux parties symétriques et la position d'un axe de symétrie 26 du canal 2, qui est perpendiculaire au plan de la figure 2. L'axe de rotation 51 est de préférence décalé par rapport à l'axe de symétrie 26. Le fluide s'écoule essentiellement dans la direction de l'axe de symétrie 26. L'obstacle 3 est préférentiellement symétrique par une symétrie miroir par rapport au plan médian 25. L'obstacle 3 est préférentiellement essentiellement plan.

La partie du canal 2 qui n'est pas obstruée par l'obstacle 3 peut être appelée goulet 23. De préférence, le goulet 23 ne varie pas dans le temps.

L'obstacle 3 bloque préférentiellement de 10 à 40% de la section du canal 2, et le goulet 23 de 60 à 90%. L'obstacle 3 bloque préférentiellement 20 à 30% de la section du canal 2, et le goulet 70 à 80%.

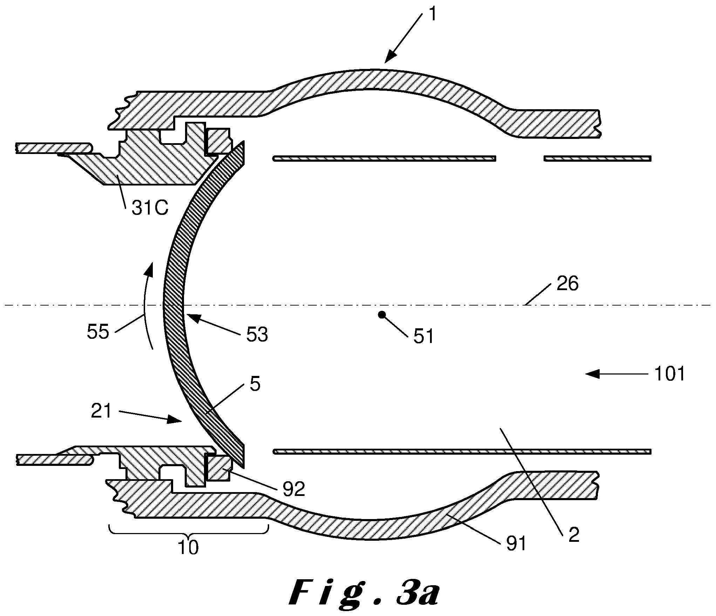

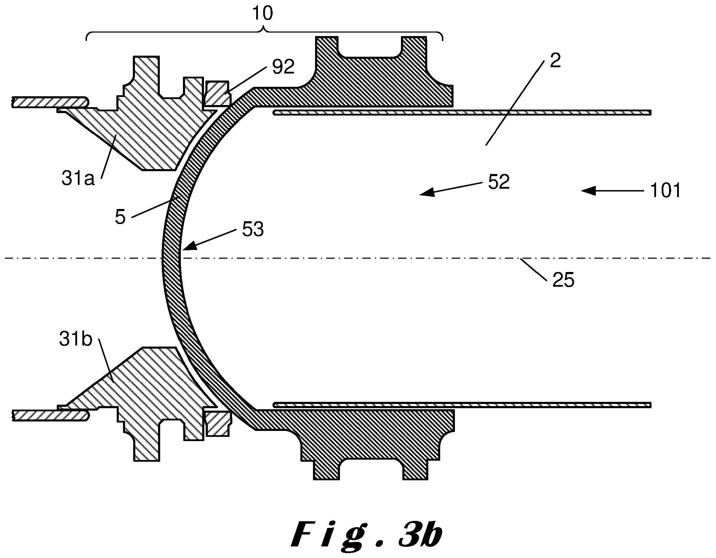

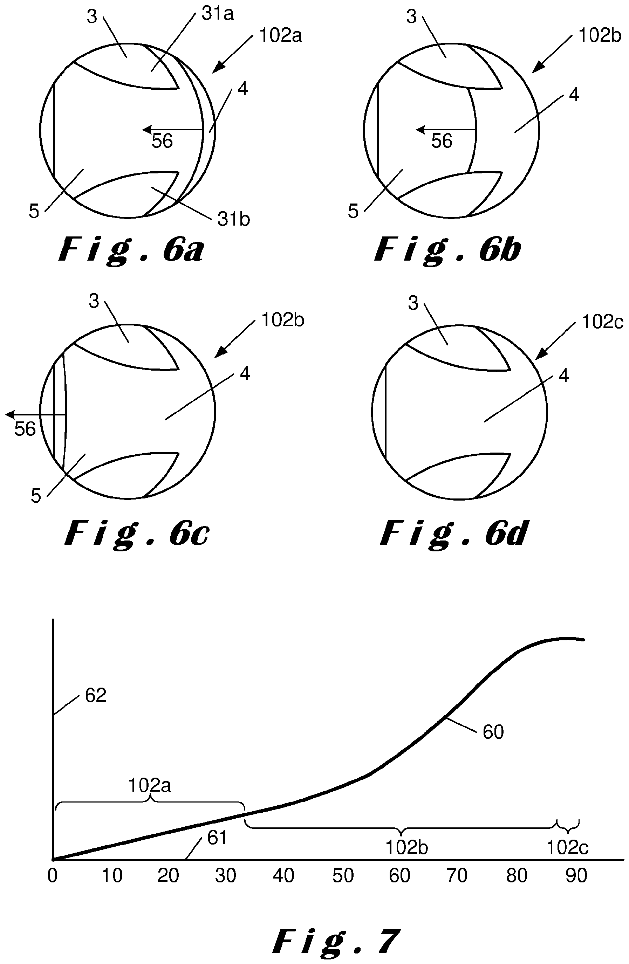

Lorsque la vanne 1 est fermée, l'obturateur rotatif 5 obstrue le goulet 23, de préférence totalement (figure 3). Lorsque la vanne 1 commence à s'ouvrir, l'obturateur rotatif 5 libère une partie du goulet 23 pour former une ouverture 4 (figure 6) dans laquelle le fluide peut passer. La partie du canal 2 qui est désobstruée en premier par l'obturateur rotatif 5 est appelée première partie 21 du canal 2. Elle jouxte de préférence la surface intérieure du canal 2. Elle est de préférence symétrique par rapport au plan médian 25. Elle peut par exemple correspondre la partie du canal 2 libérée lorsque l'obturateur rotatif 5 parcourt un intervalle angulaire allant de 0° à 10°. A la figure 2, elle est sur la droite du goulet 23.

L'obstacle 3 comprend un premier 31a et un deuxième 31b élément d'obstacles. Ils sont de préférence le symétrique l'un de l'autre par rapport au plan médian 25. Chacun d'eux comprend ou forme une saillie 32a, 32b orientée en direction de la première partie 21 du canal. La saillie 32a, 32b est de préférence formée d'une première surface 33a, 33b et d'une deuxième surface 34a, 34b.

Les premières surfaces 33a, 33b sont tournées vers la surface intérieure du canal 2. En d'autres termes, les premières surfaces 33a, 33b sont orientées à l'opposé de l'axe de symétrie 26 de façon à faire face à la surface intérieure du canal 2. Cela permet qu'il existe des creux 22a, 22b entre la paroi intérieure du canal 2 et les premières surfaces 33a, 33b.

Les deuxièmes surfaces 34a, 34b sont tournées vers l'axe de symétrie 26 de façon à être au moins partiellement opposées aux premières surfaces respectives 33a, 33b.

Les premières et surfaces deuxièmes 33a, 33b, 34a, 34b sont de préférence courbes et convexes.

Dans un mode de réalisation de l'invention, chacune des saillies 32a, 32b forme une pointe qui est dirigée vers le plan médian 25, mais de préférence pas selon une direction perpendiculaire au plan médian 25.

L'obstacle 3 comprend préférentiellement un troisième élément d'obstacle 31c. Il est symétrique par rapport au plan médian 25. Il est de préférence situé dans le canal 2 à l'opposé de la première partie 21 du canal. Le troisième élément d'obstacle 31c peut comprendre une surface 32c parallèle à l'axe de rotation 51.

Les premier 31a, deuxième 31b et optionnellement troisième 31c éléments d'obstacle sont préférentiellement dans un même plan.

Les premier 31a, deuxième 31b et optionnellement troisième 31c éléments d'obstacle sont préférentiellement disjoints, dans le sens où ils préférentiellement sont tous indépendamment fixés au canal 2. Néanmoins, ils pourraient être joints tout en restant dans le cadre de l'invention.

L'obstacle 3 ne comporte de préférence pas d'autres éléments d'obstacle que les premier 31a, deuxième 31b et troisième 31c éléments d'obstacle.

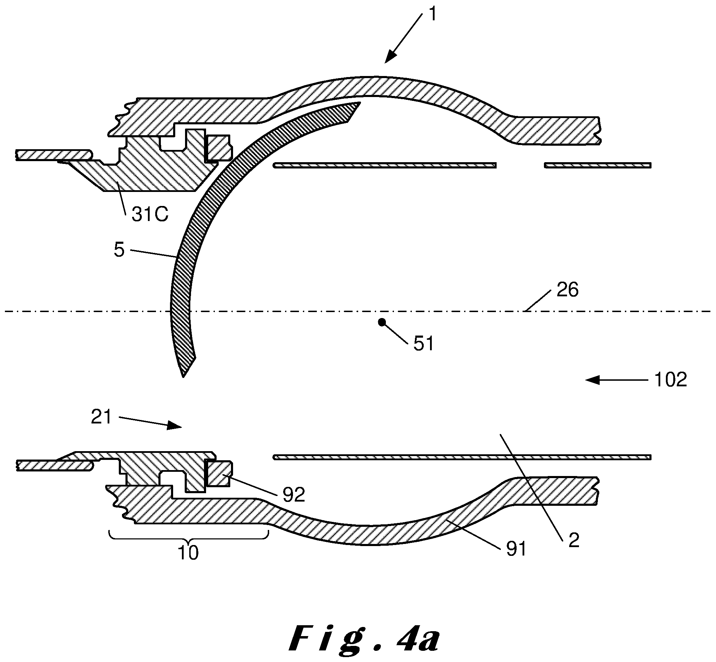

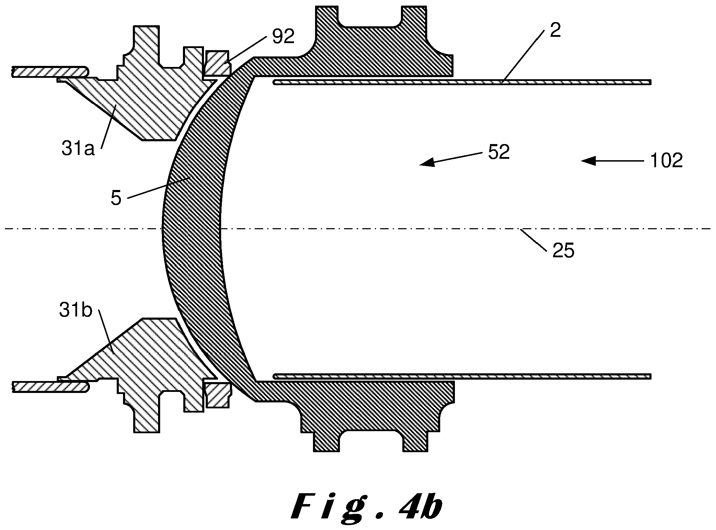

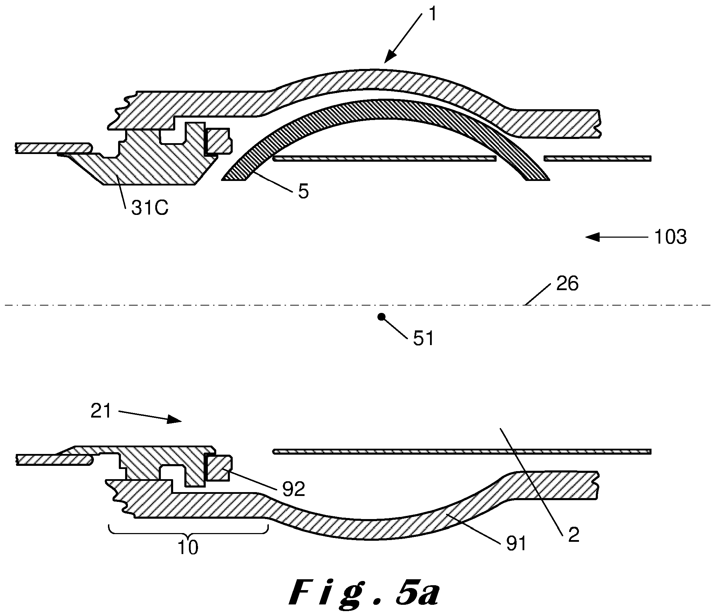

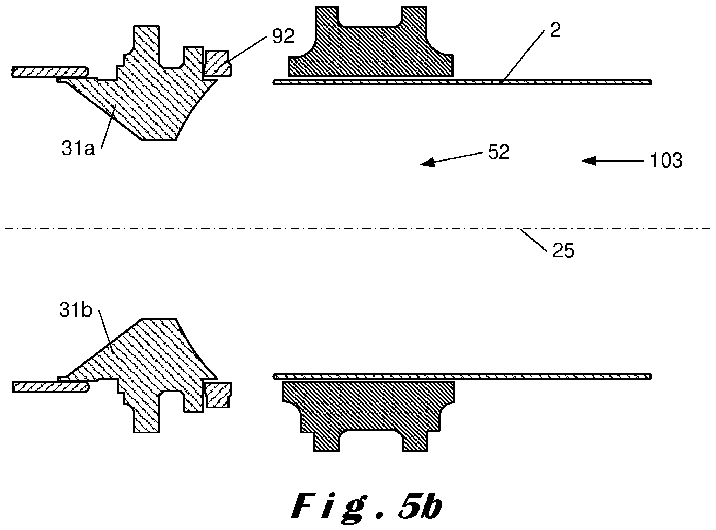

La figure 3a est une vue en coupe schématique dans le plan médian 25, et illustrant une vanne 1 selon un mode de réalisation de l'invention dans une position fermée 101. La figure 3b est une vue en coupe schématique dans un plan comprenant l'axe de symétrie 26 et perpendiculaire au plan médian 25, et illustrant une vanne 1 selon un mode de réalisation de l'invention dans une position fermée 101. Les figures 4a et 4b correspondent à une position 102 intermédiaire entre la position fermée 101 et une position ouverte 103. Les figures 5a et 5b correspondent à la position ouverte 103. Dans les figures 3 à 5, il est supposé que le fluide s'écoule de la gauche vers la droite. Ces figures permettent d'illustrer un joint 92 d'étanchéité permettant d'éviter les fuites entre l'obturateur rotatif 5 et l'obstacle 3 et un guide 91 permettant de guider la rotation de l'obturateur rotatif 5.

L'obstacle 3 est préférentiellement situé en amont de l'axe de rotation 51 par rapport au mouvement de fluide.

En position fermée 101, l'obturateur rotatif 5 est de préférence partiellement engagés entre le premier 31a et le deuxième 31b éléments d'obstacle. En position fermée 101, l'obturateur rotatif 5 est de préférence partiellement engagés entre le troisième élément d'obstacle 31c et la paroi intérieure du canal 2.

La partie de l'obturateur rotatif 5 qui est dans le canal 2, en particulier l'évidement 52, est de préférence symétrique par rapport au plan médian 25. En position fermée 101, l'évidement52 est de préférence ouvert vers l'aval et l'obturateur rotatif 5 a une paroi 53 dirigée essentiellement vers l'amont.

Le dispositif d'obstruction 10 comprend l'obstacle 3 et l'obturateur rotatif 5. La partie de la section du canal 2 qui est laissée libre par le dispositif d'obstruction 10 peut être appelée ouverture 4 (figure 6). L'ouverture 4 varie en fonction du temps. Le débit de fluide à travers la vanne 1 dépend principalement de l'aire de l'ouverture 4.

La flèche 55 représente la direction de rotation de l'obturateur rotatif 5 entre la position fermée 101 et la position ouverte 103. L'obturateur rotatif 5 fait de préférence une rotation de 90° autour de l'axe de rotation 51 entre la position fermée 101 et la position ouverte 103.

Comme visible à la figure 5a, en position fermée 103, le troisième élément d'obstacle 31c fait écran pour la partie de l'obturateur rotatif 5 qui est dans le plan médian 25, et qui peut être appelée partie médiane de l'obturateur rotatif 5. Comme visible à la figure 5b, en position fermée 103, le premier 31a et le deuxième 31b éléments d'obstacle font écran pour les parties de l'obturateur rotatif 5 qui sont de part et d'autre de l'évidement 52 le long de l'axe 51,et qui peuvent être appelées parties supérieure et inférieure de l'obturateur rotatif 5.

La figure 6 est une vue en élévation illustrant l'évolution de la position de l'obturateur rotatif 5 au fur et à mesure de sa course rotative. La flèche 56 est la direction d'agrandissement de l'ouverture 4. Cette direction est parallèle au plan médian 25. Les saillies 32a, 32b pointent à la fois dans une direction partiellement opposée à cette direction d'agrandissement de l'ouverture 4 et vers le plan médian 25.

La figure 7 illustre un exemple de courbe 60 de débit 62 en fonction de l'angle 61 en degrés de rotation de l'obturateur rotatif 5, en considérant que 0° est la position fermée 101 de la vanne 1 et 90° est la position ouverte 103 de la vanne 1. La courbe 60 débit 62 versus angle 61 dépend de la forme de l'obstacle 3.

La figure 6a correspond à une première partie 102a de la course rotative, qui est la partie de course rotative entre la position fermée et la rencontre de l'ouverture 4 avec les premier et deuxième éléments d'obstacle 31a, 31b. Le dispositif d'obstruction 10 est de préférence conçu pour ne pas obstruer l'ouverture 4 durant la première partie 102a de la course rotative afin d'avoir un débit qui augmente vite en fonction de l'angle de rotation. De préférence, les saillies 32a, 32b sont les parties des premier et deuxième éléments d'obstacle 31a, 31b qui sont rencontrées en premier par l'ouverture 4.

Les figures 6b et 6c correspondent à une deuxième partie 102b de la course rotative, qui est la partie de course rotative entre la rencontre de l'ouverture 4 avec les premier et deuxième éléments d'obstacle 31a, 31b et la rencontre de l'ouverture 4 avec le troisième élément d'obstacle 31c. Un premier objet de la présente invention est d'obtenir une pente de la courbe de débit 62 versus angle 61 dans la première partie 102a de la course rotative qui soit élevée, dans la deuxième partie 102b de la course rotative qui soit faible afin de permettre une régulation avec une précision élevée. Un second objet est d'avoir à la fin de la troisième partie 102c de la course rotative la plus grande valeur de débit 62.

La figure 6d correspond à une troisième partie 102c de la course rotative, qui est la partie de course rotative après la rencontre de l'ouverture 4 avec le troisième élément d'obstacle 31c. Le débit ne dépend alors quasi plus de l'angle car la quasi-totalité de l'obturateur rotatif 5 est derrière l'obstacle 3.

En d'autres termes, l'invention se rapporte notamment à une vanne 1 à boisseau pour réguler un débit de fluide à travers un canal 2. La vanne 1 comprend un obturateur rotatif 5 et un obstacle 3 situé directement en amont de l'obturateur rotatif 5. Les obstructions combinées dues à l'obturateur rotatif 5 et à l'obstacle 3 réduisent le passage possible pour le fluide à une ouverture 4 dont l'aire dépend de l'angle de rotation de l'obturateur rotatif 5. L'obstacle 3 comprend un premier 31a et un deuxième 31b éléments d'obstacle situés de part et d'autre d'un plan médian 25 perpendiculaire à l'axe de rotation 51 de l'obturateur rotatif 5. Les premier 31a et deuxième 31b éléments d'obstacle ont chacun une saillie 32a, 32b qui pointe vers la partie 21 du canal 2 qui est ouverte en premier lorsqu'on commence à ouvrir la vanne 1.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. Les fonctions des éléments ne sont pas limitées par les structures décrites ici. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Vanne (1) comprenant un canal (2) et un dispositif d'obstruction (10), le dispositif d'obstruction (10) comprenant :
• un obstacle (3) obstruant partiellement le canal (2) de façon, l'obstacle (3) comprenant un premier (31a) et un deuxième (31b) éléments d'obstacle couplés mécaniquement à une paroi intérieure du canal (2), et
• un obturateur rotatif (5) agencé pour tourner autour d'un axe de rotation (51) ;
la vanne (1) étant agencée pour avoir :
- une position fermée (101) dans laquelle le dispositif d'obstruction (10) obstrue au maximum le canal (2), et
- une position ouverte (103) dans laquelle le dispositif d'obstruction (10) obstrue au minimum le canal (2) ;
le canal (2) comprenant une première partie (21) qui est la partie du canal (2) qui est désobstruée en premier par l'obturateur rotatif (5) lors d'un mouvement de rotation de l'obturateur rotatif (5) pour passer entre la position fermée (101) et la position ouverte (103) de la vanne (1),
dans laquelle le premier (31a) et le deuxième (31b) éléments d'obstacle ont une saillie (32a, 32b) tournée en direction de la première partie (21) du canal, **caractérisée en ce que** l'obstacle (3) comprend un troisième élément d'obstacle (31c) couplé mécaniquement à une paroi intérieure du canal (2), situé à l'opposé du canal (2) par rapport à la première partie (21) du canal (2), et comprenant une surface (32c) parallèle à l'axe de rotation (51).

2. Vanne (1) selon la revendication 1, dans laquelle l'obstacle (3) est symétrique par rapport à un plan médian (25) perpendiculaire à l'axe de rotation (51) et qui sépare le canal (2) en deux parties symétriques.

3. Vanne (1) selon l'une quelconque des revendications précédentes, dans laquelle le premier (31a) et le deuxième (31b) éléments d'obstacle comprennent chacun une première surface (33a, 33b) orientée vers la surface intérieure du canal (2).

4. Vanne (1) selon la revendication précédente, dans laquelle les premières surfaces (33a, 33b) des premier (31a) et deuxième (31b) éléments d'obstacle sont courbes et convexes.

5. Vanne (1) selon l'une quelconque des revendications précédentes, dans laquelle le premier (31a) et le deuxième (31b) éléments d'obstacle comprennent chacun une deuxième surface (34a, 34b) orientée vers un axe de symétrie (26) du canal (2).

6. Vanne (1) selon la revendication précédente, dans laquelle les deuxième surfaces (34a, 34b) des premier (31a) et deuxième (31b) éléments d'obstacle sont courbes et convexes.

7. Vanne (1) selon l'une quelconque des revendications précédentes, dans laquelle l'obstacle (3) est situé en amont de l'axe de rotation (51) par rapport au mouvement de fluide.

8. Vanne (1) selon l'une quelconque des revendications précédentes, agencée pour qu'en position fermée (101), l'obturateur rotatif (5) soit partiellement engagé entre le premier (31a) et le deuxième (31b) éléments d'obstacle.

9. Vanne (1) selon l'une quelconque des revendications précédentes, dans laquelle l'axe de rotation (51) est décalé vers la première partie (21) du canal par rapport à un axe de symétrie (26) du canal (2).

10. Vanne (1) selon l'une quelconque des revendications précédentes, dans laquelle le troisième élément d'obstacle (31c) est disjoint des premier (31a) et deuxième (31b) éléments d'obstacle.

11. Vanne (1) selon l'une quelconque des revendications précédentes, comprenant au plus trois éléments d'obstacle (31a, 31b, 31c).

12. Vanne (1) selon l'une quelconque des revendications précédentes, dans laquelle l'aire de l'obstacle (3) représente 10% à 40% de l'aire d'une section du canal (2), de préférence 20% à 30% de l'aire d'une section du canal (2).

13. Utilisation d'une vanne (1) selon l'une quelconque des revendications précédentes comprenant une rotation de l'obturateur rotatif (5) autour de l'axe de rotation (51).

## Patentansprüche

1. Absperrorgan (1), umfassend einen Kanal (2) und eine Absperrvorrichtung (10), wobei die Absperrvorrichtung (10) umfasst:
• ein Hindernis (3), das den Kanal (2) teilweise versperrt, wobei das Hindernis (3) ein erstes (31a) und ein zweites (31b) Hinderniselement umfasst, die mechanisch mit einer Innenwand des Kanals (2) verbunden sind, und
• einen Drehverschluss (5), der zur Drehung um eine Drehachse (51) angeordnet ist; wobei das Absperrorgan (1) angeordnet ist, um:
- eine geschlossene Position (101) aufzuweisen, in der die Absperrvorrichtung (10) den Kanal (2) maximal absperrt, und
- eine offene Position (103) aufzuweisen, in der die Absperrvorrichtung (10) den Kanal (2) minimal absperrt;
wobei der Kanal (2) einen ersten Teil (21) umfasst, welcher der Teil des Kanals (2) ist, der bei einer Drehbewegung des Drehverschlusses (5) zum Durchgang zwischen der geschlossenen Position (101) und der offenen Position (103) des Absperrorgans (1) zunächst durch den Drehverschluss (5) nicht blockiert wird, wobei das erste (31a) und das zweite (31b) Hinderniselement einen Vorsprung (32a, 32b) aufweisen, der dem ersten Teil (21) des Kanals zugewandt ist, **dadurch gekennzeichnet, dass** das Hindernis (3) ein drittes Hinderniselement (31c) umfasst, das mechanisch mit einer Innenwand des Kanals (2) gekoppelt ist, das dem Kanal (2) in Bezug auf den ersten Teil (21) des Kanals (2) gegenüberliegt und eine zur Drehachse (51) parallele Oberfläche (32c) umfasst.

2. Absperrorgan (1) nach Anspruch 1, wobei das Hindernis (3) symmetrisch in Bezug auf eine zur Drehachse (51) senkrechte Mittelebene (25) ist, und die den Kanal (2) in zwei symmetrische Teile trennt.

3. Absperrorgan (1) nach einem der vorstehenden Ansprüche, wobei das erste (31a) und das zweite (31b) Hindernis jeweils eine erste Oberfläche (33a, 33b) umfassen, die zu der Innenoberfläche des Kanals (2) ausgerichtet ist.

4. Absperrorgan (1) nach dem vorstehenden Anspruch, wobei die ersten Oberflächen (33a, 33b) des ersten (31a) und zweiten (31b) Hinderniselements gekrümmt und konvex sind.

5. Absperrorgan (1) nach einem der vorstehenden Ansprüche, wobei das erste (31a) und das zweite (31b) Hinderniselement jeweils eine zweite Oberfläche (34a, 34b) umfassen, die zu einer Symmetrieachse (26) des Kanals (2) ausgerichtet ist.

6. Absperrorgan (1) nach dem vorstehenden Anspruch, wobei die zweiten Oberflächen (34a, 34b) des ersten (31a) und zweiten (31b) Hinderniselements gekrümmt und konvex sind.

7. Absperrorgan (1) nach einem der vorstehenden Ansprüche, wobei das Hindernis (3) in Bezug auf die Fluidbewegung stromaufwärts von der Drehachse (51) angeordnet ist.

8. Absperrorgan (1) nach einem der vorstehenden Ansprüche, das so angeordnet ist, dass der Drehverschluss (5) in der geschlossenen Position (101) teilweise zwischen dem ersten (31a) und dem zweiten (31b) Hinderniselement in Eingriff ist.

9. Absperrorgan (1) nach einem der vorstehenden Ansprüche, wobei die Drehachse (51) in Bezug auf eine Symmetrieachse (26) des Kanals (2) zum ersten Teil (21) des Kanals hin versetzt ist.

10. Absperrorgan (1) nach einem der vorstehenden Ansprüche, wobei das dritte Hinderniselement (31c) von dem ersten (31a) und zweiten (31b) Hinderniselement getrennt ist.

11. Absperrorgan (1) nach einem der vorstehenden Ansprüche, umfassend höchstens drei Hinderniselemente (31a, 31b, 31c).

12. Absperrorgan (1) nach einem der vorstehenden Ansprüche, wobei die Fläche des Hindernisses (3) 10 % bis 40 % der Fläche eines Abschnitts des Kanals (2), bevorzugt 20 % bis 30 % der Fläche eines Abschnitts des Kanals (2), beträgt.

13. Verwendung eines Absperrorgans (1) nach einem der vorstehenden Ansprüche, umfassend eine Drehung des Drehverschlusses (5) um die Drehachse (51).

## Claims

1. Valve (1) comprising a channel (2) and a blocking device (10), the blocking device (10) comprising:
• an obstacle (3) partially blocking the channel (2), the obstacle (3) comprising a first (31a) and a second (31b) obstacle element mechanically coupled to an inner wall of the channel (2), and
• a rotating blocker (5) arranged to rotate about an axis of rotation (51);
the valve (1) being arranged to have:
- a closed position (101), wherein the blocking device (10) blocks the channel (2) to the maximum, and
- an open position (103), wherein the blocking device (10) blocks the channel (2) to the minimum;
the channel (2) comprising a first portion (21) which is the portion of the channel (2) which is unblocked first by the rotating blocker (5) during a rotating movement of the rotating blocker (5) to pass between the closed position (101) and the open position (103) of the valve (1),
wherein the first (31a) and the second (31b) blocking elements have a projection (32a, 32b) rotated in the direction of the first portion (21) of the channel, **characterised in that** the obstacle (3) comprises a third blocking element (31c) mechanically coupled to an inner wall of the channel (2), situated opposite the channel (2) with respect to the first portion (21) of the channel (2), and comprising a surface (32c) parallel to the axis of rotation (51).

2. Valve (1) according to claim 1, wherein the obstacle (3) is symmetrical with respect to a median plane (25) perpendicular to the axis of rotation (51) and which separates the channel (2) into two symmetrical portions.

3. Valve (1) according to any one of the preceding claims, wherein the first (31a) and the second (31b) blocking elements each comprise a first surface (33a, 33b) oriented towards the inner surface of the channel (2).

4. Valve (1) according to the preceding claim, wherein the first surfaces (33a, 33b) of the first (31a) and second (31b) blocking elements are curved and convex.

5. Valve (1) according to any one of the preceding claims, wherein the first (31a) and the second (31b) blocking elements each comprise a second surface (34a, 34b) oriented towards an axis of symmetry (26) of the channel (2).

6. Valve (1) according to the preceding claim, wherein the second surfaces (34a, 34b) of the first (31a) and second (31b) blocking elements are curved and convex.

7. Valve (1) according to any one of the preceding claims, wherein the obstacle (3) is situated upstream from the axis of rotation (51) with respect to the fluid movement.

8. Valve (1) according to any one of the preceding claims, arranged such that in closed position (101), the rotating blocker (5) is partially engaged between the first (31a) and the second (31b) blocking elements.

9. Valve (1) according to any one of the preceding claims, wherein the axis of rotation (51) is offset towards the first portion (21) of the channel with respect to an axis of symmetry (26) of the channel (2).

10. Valve (1) according to any one of the preceding claims, wherein the third blocking element (31c) is disconnected from the first (31a) and second (31b) blocking elements.

11. Valve (1) according to any one of the preceding claims, comprising at most three blocking elements (31a, 31b, 31c).

12. Valve (1) according to any one of the preceding claims, wherein the area of the obstacle (3) represents 10% to 40% of the area of a cross-section of the channel (2), preferably 20% to 30% of the area of a cross-section of the channel (2).

13. Use of a valve (1) according to any one of the preceding claims comprising a rotation of the rotating blocker (5) about the axis of rotation (51).
